Europäisches Patentamt

European Patent Office

Office européen des brevets

(19)

(11) Numéro de publication : **0 166 748 B1**

(12) **FASCICULE DE BREVET EUROPÉEN**

(45) Date de publication du fascicule du brevet :
23.03.88

(21) Numéro de dépôt : 85900042.4

(22) Date de dépôt : 19.12.84

(86) Numéro de dépôt international :
PCT/CH 84/00200

(87) Numéro de publication internationale :
WO/8502759 (04.07.85 Gazette 85/15)

(51) Int. Cl.⁴ : **A 23 L   1/28**, A 23 L   1/314

(54) COMPOSITION ALIMENTAIRE DESTINEE A LA PREPARATION OU A LA DECORATION DES VIANDES ET PRODUITS SIMILAIRES.

(30) Priorité : 21.12.83 CH 6819/83

(43) Date de publication de la demande :
08.01.86 Bulletin 86/02

(45) Mention de la délivrance du brevet :
23.03.88 Bulletin 88/12

(84) Etats contractants désignés :
AT BE DE FR GB NL SE

(56) Documents cités :
EP-A- 0 006 821
EP-A- 0 009 897
FR-A-   464 837
FR-A- 2 188 966
NL-A-   298 358
US-A- 1 633 379
US-A- 2 786 764

(73) Titulaire : VITROCULTURE S.A.
Grand-Rue 3
CH-2900 Porrentruy (CH)

(72) Inventeur : CHEVROLET, Gérard
CH-2933 Damphreux (CH)

(74) Mandataire : Frossard, Michel, Dr. et al
A. Braun, Braun, Héritier, Eschmann AG, Patentanwälte Holbeinstrasse 36-38
CH-4051 Basel (CH)

# 0 166 748

## Description

Le goût du public et tout spécialement des consommateurs veut que les compositions alimentaires destinées à la préparation ou à la décoration des viandes et produits similaires se présentent sous une coloration foncée, en général brun foncé. Cette coloration foncée, jusqu'ici, était due le plus fréquemment à l'adjonction de colorants artificiels.

Toutefois, l'adjonction de colorants artificiels aux produits alimentaires suscite périodiquement les critiques d'une partie de la presse et de l'opinion publique, mais surtout elle fait l'objet de limitations et d'interdictions légales toujours plus sévères, en particulier dans les pays dont le développement industriel est le plus avancé.

Dans les pays en question, il se pourrait même, dans un avenir mesurable, que toute coloration artificielle des produits alimentaires soit interdite par le législateur. Il en résultera pour les maîtres d'hôtel, chefs de cuisine et traiteurs des difficultés matérielles sensibles à préparer les plats appétissants qui contribuent pour leur part à relever l'ambiance d'un repas ou à créer une atmosphère de fête.

Or, on a trouvé maintenant une composition alimentaire propre à la préparation ou à la décoration des viandes et produits similaires, destinée à remplacer les masses à garnir utilisées jusqu'à ce jour, mais qui ne contient aucun colorant artificiel. Cette composition sera donc mélangée à des préparations de viande ou sera appliquée comme masse à garnir ou élément de décoration sur des plats cuisinés ou des articles de charcuterie tels que pâtés et terrines de viande. Elle se distingue par sa stabilité à la cuisson, l'amélioration du goût des aliments qui la contiennent, la fermeté de leur texture et leur aspect décoratif, ainsi que par la stabilité de la coloration qui est naturelle et ne diffuse pas dans la masse environnante.

La composition selon l'invention comprend un ou des champignons comestibles, un ou des agents gélifiants consistant en polysaccharides, un ou des agents de texture consistant en protéines, une association de substances aromatisantes et de l'eau, ladite composition étant caractérisée en ce que le ou les champignons comestibles sont choisis parmi le Cenococcum geophilum, le Cenococcum graniforme, la truffe noire (Tuber melanosporum, Tuber nigrum), la truffe d'hiver (Tuber brumale), la truffe de Bourgogne (Tuber ancinatum) et la corne d'abondance (Craterellus cornu copioides), que le ou les agents gélifiants sont choisis parmi les polysaccharides propres à former un gel thermo-irréversible et que l'association de substances aromatisantes consiste en un vin liquoreux, un édulcorant, du sel, des épices, des légumes ou leurs extraits, des fruits ou leurs extraits, des plantes ou leurs extraits et/ou des arômes.

L'association de substances aromatisantes est choisie de façon à conférer à la composition un arôme et un goût agréable semblables à ceux des champignons comestibles.

On exposera maintenant l'invention de manière plus détaillée.

Comme champignon, on utilise de préférence le Cenococcum geophilum, le Cenococcum graniforme ou la truffe du Périgord ou truffe noire (Tuber melanosporum ou Tuber nigrum).

Le Cenoccocum mentionné ci-dessus est un champignon de forêt, classé dans les Fungi Imperfecti. Il peut être cultivé en milieu stérile, dans des milieux nutritifs liquides ou solides conventionnels ; sa période de croissance est de 3 à 4 semaines pour un domaine de température de 19 à 26 °C. Il forme en culture un mycélium noir d'un goût très fin ; il sera utilisé de préférence après cuisson. Le Cenococcum geophilum ou graniforme et la truffe noire confèrent à la composition la coloration désirée, ils renforcent l'effet des agents de texture, de plus la truffe, même en proportion modeste, contribue à l'amélioration du goût. Cependant, la truffe noire (Tuber melanosporum) n'est pas la seule truffe de qualité ; d'autres truffes comme la truffe d'hiver (Tuber brumale) ou la truffe de Bourgogne (Tuber ancinatum) peuvent être utilisées aussi. Parmi les autres champignons qui peuvent être pris en considération, on peut citer la corne d'abondance (Craterellus cornu copioides), dont la contribution cependant est plus modeste que les précédents.

Le ou les champignons constituent, de préférence, de 3 à 5 % en poids de la composition (poids frais pour la truffe, poids sec pour Cenococcum).

L'agent ou les agents gélifiants mis en jeu sont les pectines, provenant des pommes ou de l'écorce d'agrumes, et les alginates hydrosolubles, extraits des algues brunes. Les uns et les autres sont solubles à froid et les gels obtenus conservent leur forme à la chaleur. A partir des pectines à poids moléculaire élevé, on provoque la formation du gel par cuisson en milieu acide et sucré, le gel se formant au refroidissement. Bien que le gel ainsi formé soit ferme et satisfaisant, les conditions requises pour la gélification (milieu acide et sucré) limitent l'emploi de ces pectines à des cas particuliers de la présente composition.

Les pectines de poids moléculaire inférieur gélifient à froid, par addition d'ions calcium ; toutefois, le gel ainsi formé, fréquemment, résiste mal à la cuisson. Aussi, les agents gélifiants préférés sont les alginates hydrosolubles, par exemple, l'alginate de potassium, d'ammonium, de magnésium ou de sodium ; c'est ce dernier que l'on utilise de préférence. La formation du gel s'effectue à froid ou à chaud, par addition d'ions calcium qui sont apportés sous forme de sulfate de calcium, chlorure de calcium, lactate de calcium, citrate de calcium ou d'un autre sel capable de libérer des ions calcium. Le gel ainsi obtenu est stable à la stérilisation et à la cuisson.

**0 166 748**

L'agent gélifiant peut être inclus dans la composition à raison de 1 à 5 % en poids, selon le degré de fermeté que doit présenter le produit final.

Selon un mode d'exécution préféré de l'invention, on met en jeu une pectine de poids moléculaire inférieur ou l'alginate de sodium en présence d'un sel de calcium peu soluble tel que le sulfate de calcium, et d'un agent complexant des ions calcium tel que le pyrophosphate de sodium, utilisé en proportion insuffisante pour complexer tout le sel de calcium. Le sulfate de calcium libère progressivement des ions calcium qui sont aussitôt liés sous forme de complexe par le pyrophosphate de sodium jusqu'à épuisement de ce dernier. C'est alors que les ions calcium qui continuent de passer en solution provoquent la gélification. Ce mode de faire retarde la prise en gel de la masse traitée et, par là, permet de la façonner par moulage, coulée ou extrusion.

Les agents de texture peuvent être toutes protéines usuelles, d'origine animale ou végétale, notamment le blanc d'œuf, la viande, le poisson, la chair de crustacés, les farines de céréales, la farine de pomme de terre ou la farine de fèves de soja. C'est cette dernière que l'on préfère dans la réalisation pratique de l'invention. L'utilisation d'un liant comme la fécule de pomme de terre et d'un ballast comme la farine de son peuvent contribuer également à l'amélioration de la texture.

Ces agents de texture peuvent être utilisés dans la composition en une proportion allant, de préférence, de 3 à 12 % en poids, au total. Ils confèrent à la composition, conjointement avec les polysaccharides utilisés comme agents gélifiants, la structure fibreuse caractéristique des produits alimentaires de provenance animale ou végétale directe.

Les substances aromatisantes sont, notamment,

— un vin liquoreux tel que le porto, le malaga ou, de préférence, le madère, éventuellement complété par un autre vin tel que le bordeaux,

— un édulcorant ou produit sucrant tel que le cyclamate de sodium ou, de préférence, le sucre lui-même,

— le sel,

— des épices,

— des légumes ou leurs extraits, comme le jus de betterave rouge, qui donne à la composition un goût terreux, cet apport pouvant être complété, voire remplacé par d'autres légumes à racine ou à tubercule, en fonction de la nuance souhaitée,

— des arômes naturels et synthétiques, propres à donner à la composition un parfum et un goût rappelant ceux des champignons comestibles, notamment ceux qui sont spécifiques de la truffe, lesdits arômes pouvant être complétés ou remplacés par des fruits et/ou des plantes ou leurs extraits dans la mesure où ils donnent la résultante aromatique souhaitée.

— L'ensemble des substances aromatisantes peut constituer de 6 à 20 % en poids de la composition.

Il s'avère avantageux de compléter la composition par un agent de conservation tel que le benzoate de sodium (E 211) ou l'acide sorbique (E 200) et/ou un antioxydant tel que le disulfite de sodium (E 223) ou l'acide citrique (E 330) [E... : désignation de la substance selon le code européen des additifs alimentaires autorisés]. On assure ainsi une conservation satisfaisante des produits et leur utilisation ultérieure pendant quelques semaines après l'ouverture de l'emballage.

On donne ci-dessous deux exemples préférés de la composition alimentaire selon l'invention :

| Composant | | Exemple 1 | Exemple 2 |
|---|---|---|---|
| (a) | Cenococcum geophilum, poids sec | --- | 3,0-5,0 g |
| | truffe noire (Tuber melanosporum), poids frais | 3,0-5,0 g | --- |
| (b) | Alginate | 1,0-4,0 | 1,0-4,0 |
| | Sulfate de calcium (purum) | 1,0-2,0 | 1,0-2,0 |
| | Pyrophosphate de sodium (purum) | 0,3-1,5 | 0,3-1,5 |
| (c) | Protéines de soja | 3,0-4,0 | 3,0-4,0 |
| | Blanc d'oeuf | 1,0-1,5 | 1,0-1,5 |
| (d) | Madère | 2,3-3,5 | 2,3-3,5 |
| | Sucre | 1,3-2,0 | 1,3-2,0 |
| | Sel | 1,0-1,5 | 1,0-1,5 |
| | Jus de betterave rouge | 1,2-1,5 | 1,2-1,5 |
| | Arôme naturel de champignon | 0,6-1,2 | 0,4-0,6 |

3

(Suite)

| Composant | Exemple 1 | Exemple 2 |
|---|---|---|
| Arôme de bolet (réaction de Maillard) | 0,2-0,3 | 0,2-0,3 |
| Arôme de truffe (réaction de Maillard) | 0,2-0,3 | 0,2-0,3 |
| Benzoate de sodium | 0,1 | 0,1 |
| Bisulfite de sodium | 0,05 | 0,05 |
| Eau, q.s. pour 100 g | | |
| | 100,00 g | 100,00 g |

Pour fabriquer la composition on procède, de manière générale, comme suit.

On prépare une masse homogène à partir d'eau, d'un ou d'agents gélifiants consistant en polysaccharides propres à former un gel thermo-irréversible, d'un ou plusieurs des champignons comestibles mentionnés ci-dessus, d'un ou d'agents de texture consistant en protéines et de l'association de substances aromatisantes décrite ci-dessus, on donne à la masse la forme voulue et avant, pendant ou après la mise en forme, on provoque la gélification de la masse par un traitement chimique, c'est-à-dire la cuisson en milieu acide et sucré lorsque l'agent gélifiant est une pectine de poids moléculaire élevé, l'action d'ions calcium lorsque l'agent gélifiant est une pectine de poids moléculaire inférieur ou un alginate hydrosoluble.

Dans la pratique, on peut distinguer plusieurs modes d'exécution du procédé.

Si l'on met en jeu une pectine de poids moléculaire élevé comme agent gélifiant, pour obtenir une masse confite, on prépare une solution ou dispersion aqueuse sucrée de la pectine, on ajoute, en mélangeant jusqu'à obtention d'une masse homogène, le ou les champignons comestibles, le ou les agents de texture et l'association de substances aromatisantes, on porte et maintient la masse à la température de cuisson en ajoutant l'agent acide de gélification, on confère la forme voulue à la masse par extrusion, coulée ou mise en moule et on laisse refroidir.

Si l'on met en jeu une pectine de poids moléculaire inférieur ou un alginate hydrosoluble, on prépare une solution ou dispersion aqueuse de la pectine ou de l'alginate, on ajoute, en mélangeant jusqu'à obtention d'une masse homogène, le ou les champignons comestibles, le ou les agents de texture et l'association de substances aromatisantes, on confère la forme voulue à la masse par extrusion, façonnement ou découpe, et on immerge la masse formée, à froid ou à chaud, dans un bain de gélification contenant des ions calcium. Le bain de gélification consiste en une solution aqueuse de chlorure ou de lactate de calcium ou une suspension aqueuse de citrate de calcium.

Selon un mode d'exécution particulièrement avantageux, on prépare une solution ou dispersion aqueuse à partir d'une pectine de poids moléculaire inférieur ou d'un alginate hydrosoluble et d'un agent complexant des ions calcium, on ajoute, en mélangeant jusqu'à obtention d'une masse homogène, le ou les champignons comestibles, le ou les agents de texture et l'association de substances aromatisantes, on traite la masse, à froid ou à chaud, par une suspension aqueuse de sulfate de calcium en une quantité supérieure à la quantité stoechiométrique nécessaire pour complexer entièrement l'agent complexant mis en jeu et on confère la forme voulue à la masse par extrusion, coulée ou mise en moule, avant que la gélification commence. L'agent complexant mis en jeu est, de préférence, le pyrophosphate de sodium.

On peut, par exemple, mélanger le pyrophosphate avec l'alginate de sodium, disperser dans l'eau sous agitation, ajouter le Cenococcum geophilum et/ou la truffe noire broyés finement, additionner les autres ingrédients sauf le sulfate de calcium, mélanger jusqu'à l'obtention d'une masse homogène, chauffer la masse à 70°C ou attendre 15 minutes, additionner le sulfate de calcium dispersé dans un peu d'eau et mettre en forme immédiatement.

La composition peut être moulée, coulée ou extrudée sous des formes diverses, selon l'application prévue. Par exemple, elle peut être façonnée sous forme de bâtons de section circulaire ou quelconque, sous forme de cubes destinés à être mélangés aux préparations de viande ou sous quelque autre forme décorative adaptée à l'utilisation.

Finalement, on stérilise les produits façonnés, de préférence par chauffage en autoclave à 120°C en milieu vapeur d'eau, durant 20-30 minutes, et on les met sous emballage, par exemple en boîte métallique, en bocal ou en opérant sous vide.

Exemple d'utilisation dans un pâté en croûte

Pour 6 à 8 personnes

Ingrédients pour la pâte brisée : 400 g de farine, 200 g de beurre ou de margarine, 1 cuillerée à café de sel.

Pour la garniture : 250 g de viande de veau ou de restes de rôti de veau, 250 g de chair à saucisse, 250 g de lard gras, 250 g de foie de porc, 50 g de la composition alimentaire selon l'invention, sous forme de mini-cubes, 2 cuillerées à soupe de cognac, 1 sachet de gelée au madère, 1 œuf, sel et poivre.
Pour le moule : 20 g de beurre.

Versez la farine dans une terrine, faites une fontaine (un creux) au centre, disposez dans cette fontaine le beurre coupé en morceaux et le sel, malaxez du bout des doigts, ajoutez 1 verre d'eau en pétrissant légèrement jusqu'à ce que la pâte se détache de la terrine, roulez-la en boule.
Coupez en petits morceaux le veau, le lard et le foie ; mélangez-les à la chair à saucisse, ajouter le cognac, salez, poivrez, mélangez.
Faites chauffer le four à température moyenne, beurrez largement un grand moule à cake.
Etendez au rouleau à pâtisserie les 2/3 de la pâte en un rectangle de 6 millimètres d'épaisseur, garnissez-en le moule en appuyant la main dans le fond pour faire prendre à la pâte les formes du moule et en la laissant légèrement déborder.
Emplissez le moule avec la viande hachée en la tassant avec le dos de la main. Répartissez dans la masse la composition alimentaire.
Abaissez (aplatissez) au rouleau le reste de pâte, formez-en un couvercle rectangulaire.
Posez-le sur le moule, mouillez les bords de la pâte et rabattez-les sur le couvercle en formant un bourrelet et en les soudant du bout des doigts ou avec les dents d'une fourchette.
Découpez un cercle d'un centimètre environ de diamètre au centre du couvercle, enfoncez-y une petite cheminée faite avec une feuille d'aluminium roulée sur le doigt, décorez le couvercle de quelques dessins géométriques tracés avec la pointe d'un couteau.
Cassez l'œuf en séparant le jaune du blanc, badigeonnez le pâté de jaune d'œuf, glissez-le dans le four et faites cuire à four moyen pendant 1 heure 30 environ.
Laissez tiédir, démoulez, laissez le pâté refroidir sur une grille.
Préparez la gelée selon le mode d'emploi indiqué, laissez-la refroidir légèrement et faites-la couler dans le pâté par la cheminée, servez froid.
L'état antérieur de la technique peut être illustré par les documents suivants.
Demande de brevet allemand publiée (avant examen) n° 2 905 920. On passe à l'eau bouillante de grands champignons, enlève la tige et place une boulette de viande en forme de tige dans le trou qui s'est formé à la base du chapeau ; par stérilisation, la boulette se dilate et reste ainsi fixée au chapeau. La boulette de viande peut contenir diverses épices et, sous forme de purée, la tige elle-même du champignon. On obtient par là un aliment de haut goût et d'aspect plaisant, prêt à être servi.
Demande de brevet français n° 2 311 498. En cultivant des souches de l'espèce Polyporus en profondeur dans un milieu d'hydrates de carbone selon un processus continu, on obtient un mycélium de haute valeur nutritive, riche en protéines. On peut l'utiliser comme additif dans les produits de viande, comme matière première pour la production de viande synthétique, comme additif dans les fromages, les conserves de légumes, le pain et la pâtisserie.
Demande de brevet français n° 2 430 201/demande de brevet européen n° 6 821. On soumet des champignons à un traitement de confisage dans des sirops contenant un agent conservateur de couleur et d'arôme, l'acide ascorbique par exemple, et éventuellement un gélifiant tel que la pectine, jusqu'à une teneur en sucre de l'ordre de 60 %. On obtient ainsi un produit alimentaire de longue conservation qui peut être utilisé en pâtisserie et en confiserie, notamment pour la confection de glaces, sorbets et bonbons.
Demande de brevet français n° 2 313 872. On part d'une masse mycélienne fongique ayant une turgescence réduite, on la roule entre deux surfaces mobiles pour la façonner en un cylindre, on empile sur elles-mêmes deux ou plusieurs sections du cylindre et on roule l'empilement ainsi formé. On obtient ainsi une masse correspondante mais texturée, de structure stratifiée et fibreuse analogue à celle de la viande ou du poisson, acceptable en alimentation humaine.
Demande de brevet néerlandais n° 298 358. On prépare une masse homogène à partir de champignons frais, de viande ou de poisson ou de produits de ce genre, d'amidon, de charbon actif et d'épices et substances aromatisantes et on ajoute à la masse, comme liant, de l'albumine, du sang d'animal à haute teneur en albumine et de l'eau. La masse obtenue peut être façonnée en boulettes que l'on cuit dans du bouillon et auxquelles on donne ensuite la forme de champignons noirs.
Demande de brevet français n° 2 188 966. Un produit alimentaire à faible pouvoir calorique comprend des farines et/ou des viandes et, à raison de 5 à 20 % en poids, des colloïdes végétaux tels que des alginates ou des gommes alimentaires, par exemple de la gomme Guar, des champignons ou des carottes. Les graisses, s'il y a lieu, peuvent être remplacées par de l'huile de paraffine. De préférence, le produit contient aussi un émulsionnant tel que l'amidon, la caséine, la lécithine ou la gélatine. Il peut être utilisé comme anorexigène, notamment pour les cures d'amaigrissement.
Brevet des Etats-Unis n° 2 786 764. On fabrique des saucisses sans boyau à partir d'une suspension de viande dans une solution aqueuse d'alginate ; on provoque la gélification par addition d'ions calcium, puis on met en forme et on crée un revêtement relativement imperméable en soumettant les pièces façonnées à l'action d'une solution d'alginate et d'ions calcium.

**Revendications** (pour les Etats contractants : BE, DE, FR, GB, NL, SE)

1. Composition alimentaire destinée à la préparation ou à la décoration des viandes et produits similaires, comprenant un ou des champignons comestibles, un ou des agents gélifiants consistant en polysaccharides, un ou des agents de texture consistant en protéines, une association de substances aromatisantes et de l'eau, caractérisée en ce que le ou les champignons comestibles sont choisis parmi le Cenococcum geophilum, le Cenococcum graniforme, la truffe noire (Tuber melanosporum, Tuber nigrum), la truffe d'hiver (Tuber brumale), la truffe de Bourgogne (Tuber ancinatum) et la corne d'abondance (Craterellus cornu copioides), que le ou les agents gélifiants sont choisis parmi les polysaccharides propres à former un gel thermo-irréversible et que l'association de substances aromatisantes consiste en un vin liquoreux, un édulcorant, du sel, des épices, des légumes ou leurs extraits, des fruits ou leurs extraits, des plantes ou leurs extraits et/ou des arômes.

2. Composition alimentaire selon la revendication 1, caractérisée en ce que l'agent gélifiant est une pectine de poids moléculaire élevé, une pectine de poids moléculaire inférieur ou un alginate hydrosoluble, tel que l'alginate de sodium.

3. Composition alimentaire selon la revendication 2, caractérisée en ce que la pectine de poids moléculaire élevé est utilisée en milieu acide et sucré, et la pectine de poids moléculaire inférieur ou l'alginate hydrosoluble est utilisé ensemble avec un sel de calcium.

4. Composition alimentaire selon la revendication 3, caractérisée en ce que le sel de calcium est le chlorure, le lactate, le citrate ou le sulfate de calcium.

5. Composition alimentaire selon la revendication 4, caractérisée en ce que le sulfate de calcium est utilisé en présence d'un agent complexant des ions calcium, tel que le pyrophosphate de sodium.

6. Composition alimentaire selon la revendication 1, caractérisée en ce que les agents de texture sont des protéines animales ou végétales, de préférence la farine de fèves de soja et/ou le blanc d'œuf.

7. Composition alimentaire selon l'une des revendications 1 à 6, caractérisée en ce qu'elle comprend : du Cenococcum geophilum ou du Cenococcum graniforme ; de l'alginate de sodium, du sulfate de calcium et du pyrophosphate de sodium ; des protéines de soja et/ou du blanc d'œuf ; un vin liquoreux, du sucre, du sel, des épices, des légumes ou leurs extraits, des fruits ou leurs extraits, des plantes ou leurs extraits et/ou des arômes ; et de l'eau.

8. Composition alimentaire selon l'une des revendications 1 à 6, caractérisée en ce qu'elle comprend : de la truffe noire ; de l'alginate de sodium, du sulfate de calcium et du pyrophosphate de sodium ; des protéines de soja et/ou du blanc d'œuf ; un vin liquoreux, du sucre, du sel, des épices, des légumes ou leurs extraits, des fruits ou leurs extraits, des plantes ou leurs extraits et/ou des arômes ; et de l'eau.

9. Composition alimentaire selon l'une des revendications 1 à 6, caractérisée en ce qu'elle comprend : de la corne d'abondance ; de l'alginate de sodium, du sulfate de calcium et du pyrophosphate de sodium ; des protéines de soja et/ou du blanc d'œuf ; un vin liquoreux, du sucre, du sel, des épices, des légumes ou leurs extraits, des fruits ou leurs extraits, des plantes ou leurs extraits et/ou des arômes ; et de l'eau.

10. Composition alimentaire selon l'une des revendications 1 à 10, caractérisée en ce qu'elle comprend, en outre, un agent de conservation et/ou un antioxydant.

11. Procédé de fabrication de la composition alimentaire selon la revendication 1, caractérisé en ce que l'on prépare une masse homogène à partir
— d'eau,
— d'un ou d'agents gélifiants consistant en polysaccharides propres à former un gel thermo-irréversible,
— d'un ou de champignons comestibles choisis parmi le Cenococcum geophilum, le Cenococcum graniforme, la truffe noire, la truffe d'hiver, la truffe de Bourgogne et la corne d'abondance,
— d'un ou d'agents de texture consistant en protéines, et
— d'une association de substances aromatisantes consistant en un vin liquoreux, un édulcorant, du sel, des épices, des légumes ou leurs extraits, des fruits ou leurs extraits, des plantes ou leurs extraits et/ou des arômes,
on donne à la masse la forme voulue, et avant, pendant ou après la mise en forme, on provoque la gélification de la masse par un traitement chimique, soit la cuisson en milieu acide et sucré lorsque l'agent gélifiant est une pectine de poids moléculaire élevé, soit l'action d'ions calcium lorsque l'agent gélifiant est une pectine de poids moléculaire inférieur ou un alginate hydrosoluble.

**Revendications** (pour l'Etat contractant AT)

1. Procédé de fabrication d'une composition alimentaire destinée à la préparation ou à la décoration

**0 166 748**

des viandes et produits similaires, comprenant un ou des champignons comestibles, un ou des agents gélifiants consistant en polysaccharides, un ou des agents de texture consistant en protéines, une association de substances aromatisantes et de l'eau, caractérisé en ce que l'on prépare une masse homogène à partir des composants mentionnés ci-dessus, le ou les champignons comestibles étant choisis parmi le Cenococcum geophilum, le Cenococcum graniforme, la truffe noire (Tuber melanosporum, Tuber nigrum), la truffe d'hiver (Tuber brumale), la truffe de Bourgogne (Tuber ancinatum) et la corne d'abondance (Craterellus cornu copioides), le ou les agents gélifiants étant choisis parmi les polysaccharides propres à former un gel thermo-irréversible et l'association de substances aromatisantes consistant en un vin liquoreux, un édulcorant, du sel, des épices, des légumes ou leurs extraits, des fruits ou leurs extraits, des plantes ou leurs extraits et/ou des arômes, que l'on donne à la masse la forme voulue et avant, pendant ou après la mise en forme, on provoque la gélification de la masse par un traitement chimique, soit par cuisson dans un milieu acide et sucré lorsque l'agent gélifiant est une pectine de poids moléculaire élevé, soit par action d'ions calcium lorsque l'agent gélifiant est une pectine de poids moléculaire inférieur ou un alginate hydrosoluble.

2. Procédé selon la revendication 1, caractérisé en ce que l'alginate hydrosoluble est l'alginate de sodium.

3. Procédé selon la revendication 1, caractérisé en ce que les agents de texture sont des protéines animales ou végétales, de préférence la farine de fèves de soja ou le blanc d'œuf.

4. Procédé selon la revendication 1, caractérisé en ce qu'on ajoute à la masse, en outre, un agent de conservation et/ou un antioxydant.

5. Procédé selon la revendication 1, caractérisé en ce que l'on prépare une solution ou dispersion aqueuse sucrée à partir d'une pectine de poids moléculaire élevé, on y ajoute, en mélangeant jusqu'à obtention d'une masse homogène, le ou les champignons comestibles, le ou les agents de texture et l'association de substances aromatisantes, on porte la masse à la température de cuisson et on l'y maintient cependant que l'on ajoute l'agent gélifiant acide, on donne à la masse la forme voulue par extrusion, coulée ou mise en moule et on laisse ensuite refroidir.

6. Procédé selon la revendication 1, caractérisé en ce que l'on prépare une solution ou dispersion aqueuse à partir d'une pectine de poids moléculaire inférieur ou d'un alginate hydrosoluble, on ajoute, en mélangeant jusqu'à obtention d'une masse homogène, le ou les champignons comestibles, le ou les agents de texture et l'association de substances aromatisantes, on donne à la masse la forme voulue par extrusion, façonnement ou découpe et l'on plonge la masse formée dans un bain de gélification contenant des ions calcium.

7. Procédé selon la revendication 6, caractérisé en ce que le bain de gélification consiste en une solution aqueuse de chlorure ou de lactate de calcium ou en une suspension aqueuse de citrate de calcium.

8. Procédé selon la revendication 1, caractérisé en ce que l'on prépare une solution ou dispersion aqueuse à partir d'une pectine de poids moléculaire inférieur ou d'un alginate hydrosoluble et d'un agent complexant des ions calcium, on ajoute, en mélangeant jusqu'à obtention d'une masse homogène, le ou les champignons comestibles, le ou les agents de texture et l'association de substances aromatisantes, on traite la masse par une suspension aqueuse de sulfate de calcium en une quantité supérieure à la quantité stoechiométrique nécessaire pour complexer entièrement l'agent complexant mis en jeu et l'on donne à la masse la forme voulue par extrusion, coulée ou mise en moule, avant que la gélification commence.

9. Procédé selon la revendication 8, caractérisé en ce que l'agent complexant mis en jeu est le pyrophosphate de sodium.

10. Procédé selon la revendication 9, caractérisé en ce que l'on mélange le pyrophosphate avec l'alginate de sodium, on disperse dans l'eau en agitant, on ajoute du Cenococcum geophilum finement broyé ou des truffes noires finement broyées, on additionne les autres ingrédients sauf le sulfate de calcium, on mélange jusqu'à obtention d'une masse homogène, on chauffe la masse à 70 °C ou on la laisse reposer durant 15 minutes, on additionne ensuite le sulfate de calcium dispersé dans un peu d'eau et on met la masse en forme immédiatement.

**Claims** (for the Contracting States : BE, DE, FR, GB, NL, SE)

1. Food composition intended for the preparation or decoration of meats and similar products, containing one or more edible mushrooms, one or more gelling agents consisting of polysaccharides, one or more texturing agents consisting of proteins, a combination of flavouring substances and water, characterised in that the edible mushroom or mushrooms is or are selected from the group comprising Cenococcum geophilum, Cenococcum graniforme, black truffle (Tuber melanosporum, Tuber nigrum), winter truffle (Tuber brumale), Burgundy truffle (Tuber ancinatum) and horn of plenty (Craterellus cornu copioides), the gelling agent or agents is or are chosen from the polysaccharides capable of forming a thermo-irreversible gel and the combination of flavouring substances consists of a liqueur-like wine, a sweetener, salt, spices, vegetables or vegetable extracts, fruits or fruit extracts, plants of plant extracts and/or flavourings.

7

2. Food composition as claimed in claim 1, characterised in that the gelling agent is a pectin of high molecular weight, a pectin of low molecular weight or a water-soluble alginate such as sodium alginate.

3. Food composition as claimed in claim 2, characterised in that the pectin of high molecular weight is used in a sugared acidic medium and the pectin of low molecular weight or the water soluble alginate is used together with a calcium salt.

4. Food composition as claimed in claim 3, characterised in that the calcium salt is calcium chloride, lactate, citrate or sulphate.

5. Food composition as claimed in claim 4, characterised in that the calcium sulphate is used in the presence of a complexing agent of calcium ions, such as sodium pyrophosphate.

6. Food composition as claimed in claim 1, characterised in that the texturing agents are animal or vegetable proteins, preferably soya bean flour and/or egg white.

7. Food composition as claimed in one of claims 1 to 6, characterised in that it contains : Cenococcum geophilum or Cenococcum graniforme ; sodium alginate, calcium sulphate and sodium pyrophosphate ; soya and/or egg white proteins ; a liqueur-like wine, sugar, salt, spices, vegetables or vegetable extracts, fruits or fruit extracts, plants or plant extracts and/or flavourings ; and water.

8. Food composition as claimed in one of claims 1 to 6, characterised in that it contains : black truffle ; sodium alginate, calcium sulphate and sodium pyrophosphate ; soya and/or egg white proteins ; a liqueur-like wine, sugar, salt, spices, vegetables or vegetable extracts, fruits or fruit extracts, plants or plant extracts and/or flavourings ; and water.

9. Food composition as claimed in one of claims 1 to 6, characterised in that it contains : horn of plenty ; sodium alginate, calcium sulphate and sodium pyrophosphate ; soya and/or egg white proteins ; a liqueur-like wine, sugar, salt, spices, vegetables or vegetable extracts, fruits or fruit extracts, plants or plant extracts and/or flavourings ; and water.

10. Food composition as claimed in one of claims 1 to 10, characterised in that it also contains a preservative and/or an antioxidant.

11. Process for producing the food composition as claimed in claim 1, characterised in that a homogeneous composition is prepared from
— water,
— one or more gelling agents consisting of polysaccharides capable of forming a thermo-irreversible gel,
— one or more edible mushrooms selected from Cenococcum geophilum, Cenococcum graniforme, black truffle, winter truffle, Burgundy truffle and horn of plenty,
— one or more texturing agents consisting of proteins, and
— a combination of flavouring substances consisting of a liqueur-like wine, a sweetener, salt, spices, vegetables or vegetable extracts, fruits or fruit extracts, plants or plant extracts and/or flavourings,
the composition is given the desired form and before, during or after the forming process the composition is gelled by chemical treatment, either by cooking in a sugared acidic medium if the gelling agent is a pectin of high molecular weight, or by the action of calcium ions if the gelling agent is a pectin of low molecular weight or a water soluble alginate.


**Claims** (for the Contracting State AT)

1. Process for producing a food composition intended for the preparation or decoration of meats and similar products, containing one or more edible mushrooms, one or more gelling agents consisting of polysaccharides, one or more texturing agents consisting of proteins, a combination of flavouring substances and water, characterised in that a homogeneous composition is prepared from the components mentioned hereinbefore, the edible mushroom or mushrooms being selected from among Cenococcum geophilum, Cenococcum graniforme, black truffle (Tuber melanosporum, Tuber nigrum), winter truffle (Tuber brumale), Burgundy truffle (Tuber ancinatum) and the horn of plenty (Craterellus cornu copioides), the gelling agent or agents being selected from among the polysaccharides capable of forming a thermo-irreversible gel and the combination of flavouring substances consisting of a liqueur-like wine, a sweetener, salt, spices, vegetables or vegetable extracts, fruits or fruit extracts, plants or plant extracts and/or flavourings, the composition is given the desired for and before, during or after the forming process the composition is gelled by a chemical treatment, either by cooking in a sugared acidic medium if the gelling agent is a pectin of high molecular weight or by the action of calcium ions if the gelling agent is a pectin of low molecular weight or a water-soluble alginate.

2. Process as claimed in claim 1, characterised in that the water soluble alginate is sodium alginate.

3. Process as claimed in claim 1, characterised in that the texturing agents are animal or vegetable proteins, preferably soya bean flour and/or egg white.

4. Process as claimed in claim 1, characterised in that a preservative and/or an antioxidant is also added to the composition.

5. Process as claimed in claim 1, characterised in that a sugared aqueous solution or dispersion is prepared from a pectin of high molecular weight, the edible mushroom or mushrooms, the texturing agent or agents and the combination of flavouring substances are added thereto, with stirring to obtain a homogeneous composition, the composition is heated to cooking temperature and kept at this temperature whilst the acid gelling agent is added, the composition is given the desired form by extrusion, pouring or moulding and is then left to cool.

6. Process as claimed in claim 1, characterised in that an aqueous solution or dispersion is prepared from a pectin of low molecular weight or a water soluble alginate, the edible mushroom or mushrooms, the texturing agent or agents and the combination of flavouring substances are added thereto, with stirring to obtain a homogenous composition, the composition is given the desired form by extrusion, shaping or cutting and the composition formed is immersed in a gelling bath containing calcium ions.

7. Process as claimed in claim 6, characterised in that the gelling bath consists of an aqueous solution of calcium chloride or lactate or an aqueous suspension of calcium citrate.

8. Process as claimed in claim 1, characterised in that an aqueous solution or dispersion is prepared from a pectin of low molecular weight or a water soluble alginate and a complexing agent for calcium ions, the edible mushroom or mushrooms, the texturing agent or agents and the combination of flavouring substances are added thereto, with stirring to obtain a homogeneous composition, the composition is treated with an aqueous suspension of calcium sulphate in a quantity greater than the stoichiometric quantity required to obtain total complexing of the complexing agent used and the composition is given the desired form by extrusion, pouring or moulding, before gelling starts.

9. Process as claimed in claim 8, characterised in that the complexing agent used is sodium pyrophosphate.

10. Process as claimed in claim 9, characterised in that the pyrophosphate is mixed with sodium alginate, it is dispersed in water with stirring, finely ground Cenococcum geophilum or finely ground black truffles are added, the other ingredients with the exception of the calcium sulphate are added, the mixture is stirred until a homogeneous composition is obtained, which is heated to 70 °C or left to stand for 15 minutes, then the calcium sulphate dispersed in a little water is added and the composition is immediately formed.


**Patentansprüche** (für die Vertragsstaaten : BE, DE, FR, GB, NL, SE)

1. Nahrungsmittelzusammensetzung, die zum Zubereiten oder Verzieren von Fleisch und ähnlichen Produkten bestimmt ist, auf der Basis von einem oder mehreren essbaren Pilz(en), einem oder mehreren Geliermittel(n), das (die) aus Polysacchariden besteht (bestehen), einem oder mehreren Texturmittel(n), das (die) aus Eiweissstoffen besteht (bestehen), einer Assoziation von aromatisierenden Substanzen und Wasser, dadurch gekennzeichnet, dass der oder die essbare(n) Pilz(e) aus Cenococcum geophilum, Cenococcum graniforme, der schwarzen Trüffel (Tuber melanosporum, Tuber nigrum), der Wintertrüffel (Tuber brumale), der Burgundertrüffel (Tuber ancinatum) und dem Füllhorn (Craterellus cornu copioides) gewählt ist (sind), das oder die Geliermittel aus Polysacchariden ausgewählt ist (sind), welche ein thermo-irreversibles Gel zu bilden vermögen, und die Assoziation von aromatisierenden Substanzen aus einem likörartigen Wein, einem Süssstoff, Salz, Gewürzen, Gemüsen oder deren Extrakten, Früchten oder deren Extrakten, Pflanzen oder deren Extrakten und/oder Aromastoffen besteht.

2. Nahrungsmittelzusammensetzung nach Anspruch 1, dadurch gekennzeichnet, dass das Geliermittel ein Pektin von hohem Molekulargewicht, ein Pektin von geringem Molekulargewicht oder ein wasserlösliches Alginat, wie Natriumalginat, ist.

3. Nahrungsmittelzusammensetzung nach Anspruch 2, dadurch gekennzeichnet, dass das Pektin von hohem Molekulargewicht in saurem und gezuckertem Medium verwendet wird, und das Pektin von geringem Molekulargewicht oder das wasserlösliche Alginat zusammen mit einem Calciumsalz verwendet wird.

4. Nahrungsmittelzusammensetzung nach Anspruch 3, dadurch gekennzeichnet, dass das Calciumsalz das Calciumchlorid, -lactat, -citrat, oder -sulfat ist.

5. Nahrungsmittelzusammensetzung nach Anspruch 4, dadurch gekennzeichnet, dass das Calciumsulfat in Gegenwart eines die Calciumionen komplexierenden Agens, wie Natriumpyrophosphat, verwendet wird.

6. Nahrungsmittelzusammensetzung nach Anspruch 1, dadurch gekennzeichnet, dass die Texturmittel tierische oder pflanzliche Eiweissstoffe, vorzugsweise Sojabohnenmehl und/oder Eiklar, sind.

7. Nahrungsmittelzusammensetzung nach einem der Ansprüche 1 bis 6, dadurch gekennzeichnet, dass sie Cenococcum geophilum oder Cenococcum graniforme ; Natriumalginat, Calciumsulfat und Natriumpyrophosphat ; Sojaeiweissstoffe und/oder Eiklar ; einen likörartigen Wein, Zucker, Salz, Gewürze, Gemüse oder deren Extrakte, Früchte oder deren Extrakte, Pflanzen oder deren Extrakte und/oder Aromastoffen ; und Wasser enthält.

8. Nahrungsmittelzusammensetzung nach einem der Ansprüche 1 bis 6, dadurch gekennzeichnet, dass sie schwarze Trüffel ; Natriumalginat, Calciumsulfat und Natriumpyrophosphat ; Sojaeiweissstoffe und/oder Eiklar ; einen likörartigen Wein, Zucker, Salz, Gewürze, Gemüse oder deren Extrakte, Früchte oder deren Extrakte, Pflanzen oder deren Extrakte und/oder Aromastoffe ; und Wasser enthält.

9. Nahrungsmittelzusammensetzung nach einem der Ansprüche 1 bis 6, dadurch gekennzeichnet, dass sie Füllhorn ; Natriumalginat, Calciumsulfat und Natriumpyrophosphat ; Sojaeiweissstoffe und/oder Eiklar ; einen likörartigen Wein, Zucker, Salz, Gewürze, Gemüse oder deren Extrakte, Früchte oder deren Extrakte, Pflanzen oder deren Extrakte und/oder Aromastoffe ; und Wasser enthält.

10. Nahrungsmittelzusammensetzung nach einem der Ansprüche 1 bis 10, dadurch gekennzeichnet, dass sie ausserdem ein Konservierungsmittel und/oder ein Antioxidationsmittel enthält.

11. Verfahren zur Herstellung der Nahrungsmittelzusammensetzung nach Anspruch 1, dadurch gekennzeichnet, dass eine homogene Masse ausgehend von
— Wasser,
— einem oder mehreren Geliermittel(n), das (die) aus Polysacchariden besteht (bestehen),
— einem oder mehreren essbaren Pilze(n), welcher (welche) aus Cenococcum geophilum, Cenococcum graniforme, der schwarzen Trüffel, der Wintertrüffel, der Burgundertrüffel und dem Füllhorn ausgewählt wird (werden),
— einem oder mehreren Texturmittel(n), das (die) aus Eiweissstoff(en) besteht (bestehen), und
— einer Assoziation von aromatisierenden Substanzen, welche aus einem likörartigen Wein, einem Süssstoff, Salz, Gewürzen, Gemüsen oder deren Extrakten, Früchten oder deren Extrakten, Pflanzen oder deren Extrakten und/oder Aromastoffen besteht, hergestellt wird,
dass der Masse die gewünschte Form verliehen wird und dass vor, während oder nach der Formung die Gelierung der Masse durch chemische Behandlung, entweder durch Kochen in saurem und gezuckertem Medium, wenn das Geliermittel ein Pectin von hohem Molekulargewicht ist, oder durch Einwirkung von Calciumionen, wenn das Geliermittel ein Pectin von geringem Molekulargewicht oder ein wasserlösliches Alginat ist, bewirkt wird.


**Patentansprüche** (für den Vertragsstaat AT)

1. Verfahren zur Herstellung einer Nahrungsmittelzusammensetzung, die zum Zubereiten oder Verzieren von Fleisch und ähnlichen Produkten bestimmt ist, auf der Basis von einem oder mehreren essbaren Pilz(en), einem oder mehreren Geliermittel(n), das (die) aus Polysacchariden besteht (bestehen), einem oder mehreren Texturmittel(n), das (die) aus Eiweissstoff(en) besteht (bestehen), einer Assoziation von aromatisierenden Substanzen und Wasser, dadurch gekennzeichnet, dass eine homogene Masse ausgehend von den oben genannten Komponenten, wobei der oder die essbare(n) Pilz(e) aus Cenococcum geophilum, Cenococcum graniforme, der schwarzen Trüffel (Tuber melanosporum, Tuber nigrum), der Wintertrüffel (Tuber brumale), der Burgundertrüffel (Tuber ancinatum) und dem Füllhorn (Craterellus cornu copioides) ausgewählt wird (werden), das oder die Geliermittel aus Polysacchariden ausgewählt wird (werden), welche ein thermo-irreversibles Gel zu bilden vermögen, und die Assoziation von aromatisierenden Substanzen aus einem likörartigen Wein, einem Süssstoff, Salz, Gewürzen, Gemüsen oder deren Extrakten, Früchten oder deren Extrakten, Pflanzen oder deren Extrakten und/oder Aromastoffen besteht, hergestellt wird, dass der Masse die gewünschte Form verliehen wird und dass vor, während oder nach der Formung die Gelierung der Masse durch chemische Behandlung, entweder durch Kochen in saurem und gezuckertem Medium, wenn das Geliermittel ein Pektin von hohem Molekulargewicht ist, oder durch Einwirkung von Calciumionen, wenn das Geliermittel ein Pektin von geringem Molekulargewicht oder ein wasserlösliches Alginat ist, bewirkt wird.

2. Verfahren nach Anspruch 1, dadurch gekennzeichnet, dass das wasserlösliche Alginat Natriumalginat ist.

3. Verfahren nach Anspruch 1, dadurch gekennzeichnet, dass die Texturmittel tierische oder pflanzliche Eiweissstoffe, vorzugsweise Sojabohnenmehl oder Eiklar, sind.

4. Verfahren nach Anspruch 1, dadurch gekennzeichnet, dass ausserdem der Masse ein Konservierungsmittel und/oder ein Antioxydationsmittel vor der Formung zugegeben wird.

5. Verfahren nach Anspruch 1, dadurch gekennzeichnet, dass eine gezuckerte wässrige Lösung oder Dispersion aus einem Pektin von hohem Molekulargewicht hergestellt wird, dass dieser unter Mischen bis zur Herstellung einer homogenen Masse der oder die essbare(n) Pilz(e), das oder die Texturmittel und die Assoziation der aromatisierenden Substanzen zugegeben werden, dass die Masse auf Kochtemperatur gebracht und auf dieser gehalten wird, wobei das saure Geliermittel zugegeben wird, dass die Masse durch Extrusion, Giessen oder Einformen in die gewünschte Form übergeführt und dann abkühlen gelassen wird.

6. Verfahren nach Anspruch 1, dadurch gekennzeichnet, dass eine wässrige Lösung oder Dispersion ausgehend von einem Pektin von geringem Molekulargewicht oder einem wasserlöslichen Alginat hergestellt wird, dass unter Mischen bis zur Herstellung einer homogenen Masse der oder die essbare(n) Pilz(e), das oder die Texturmittel und die Assoziation von aromatisierenden Substanzen zugegeben werden, dass die Masse durch Extrusion, Formen oder Schneiden in die gewünschte Form übergeführt und die geformte Masse in ein Gelierbad eingetaucht wird, das Calciumionen enthält.

7. Verfahren nach Anspruch 6, dadurch gekennzeichnet, dass das Gelierbad aus einer wässrigen Calciumchlorid- oder -lactatlösung oder einer wässrigen Calciumcitratsuspension besteht.

8. Verfahren nach Anspruch 1, dadurch gekennzeichnet, dass eine wässrige Lösung oder Dispersion ausgehend von einem Pektin von geringem Molekulargewicht oder einem wasserlöslichen Alginat und einem Komplexbildner für die Calciumionen hergestellt wird, dass unter Mischung bis zur Herstellung einer homogenen Masse der oder die essbare(n) Pilz(e), das oder die Texturmittel und die Assoziation von aromatisierenden Substanzen zugegeben werden, dass die Masse mit einer wässrigen Suspension von Calciumsulfat in einer Menge behandelt wird, die die stöchiometrische Menge übersteigt, die zur vollständigen Komplexierung des eingesetzten Komplexbildners erforderlich ist und dass der Masse die gewünschte Form durch Extrusion, Giessen oder Einformen vor dem Einsetzen der Gelierung verliehen wird.

9. Verfahren nach Anspruch 8, dadurch gekennzeichnet, dass der eingesetzte Komplexbildner Natriumpyrophosphat ist.

10. Verfahren nach Anspruch 9, dadurch gekennzeichnet, dass das Pyrophosphat mit dem Natriumalginat vermischt wird, dass unter Rühren in Wasser dispergiert wird, dass fein zerkleinertes Cenococcum geophilum oder fein zerkleinerte schwarze Trüffel zugegeben wird bzw. werden, dass die übrigen Ingredienzien mit Ausnahme des Calciumsulfats zugegeben werden, dass bis zum Erhalt einer homogenen Masse gemischt wird, dass die Masse auf 70 °C erwärmt oder 15 Minuten lang ruhen gelassen wird, dass dann das in wenig Wasser dispergierte Calciumsulfat zugegeben wird und die Masse sofort geformt wird.